(19) Europäisches Patentamt
European Patent Office
Office européen des brevets

(11) **EP 3 161 808 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **15730980.8**

(22) Anmeldetag: **03.06.2015**

(51) Int Cl.:
*G08G 1/01* (2006.01)   *G08G 1/14* (2006.01)

(86) Internationale Anmeldenummer:
**PCT/EP2015/062390**

(87) Internationale Veröffentlichungsnummer:
**WO 2015/197329 (30.12.2015 Gazette 2015/52)**

(54) **VERFAHREN ZUM VERARBEITEN VON MESSDATEN EINES FAHRZEUGES ZUR BESTIMMUNG DES BEGINNS EINER PARKPLATZSUCHE UND COMPUTERPROGRAMMPRODUKT**

METHOD FOR PROCESSING MEASUREMENT DATA OF A VEHICLE IN ORDER TO DETERMINE THE START OF A SEARCH FOR A PARKING SPACE AND COMPUTER PROGRAM PRODUCT

PROCÉDÉ DE TRAITEMENT DES DONNÉES DE MESURE D'UN VÉHICULE EN VUE DE DÉFINIR LE DÉBUT DE LA RECHERCHE D'UN EMPLACEMENT DE STATIONNEMENT ET PRODUIT LOGICIEL INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2014 DE 102014212336**

(43) Veröffentlichungstag der Anmeldung:
**03.05.2017 Patentblatt 2017/18**

(73) Patentinhaber: **Bayerische Motoren Werke Aktiengesellschaft**
**80809 München (DE)**

(72) Erfinder:
• **KOTZOR, Daniel**
**82229 Seefeld (DE)**
• **BELZNER, Heidrun**
**82229 Seefeld (DE)**

(56) Entgegenhaltungen:
**EP-A1- 2 602 777      WO-A1-2010/023571**
**DE-T5-112009 000 145**

**Beschreibung**

Die vorliegende Erfindung betrifft ein Verfahren zum Verarbeiten von Messdaten eines Fahrzeuges zur Bestimmung des Beginns einer Parkplatzsuche, sowie ein Computerprogrammprodukt.

Die Bestimmung des Beginns einer Parkplatzsuche ist beispielsweise für unterschiedliche Parkinformationsdienste und für die Städteplanung von großer Bedeutung.

Aktuelle Parkdienste bieten Informationen zu Parkhäusern sowie öffentlich oder gewerblich betriebenen P+R Anlagen (Standort, Auslastung, Reservierung). Die Parksituation im öffentlichen Straßenraum ist weitestgehend unbekannt. Nur vereinzelt sind Straßenzüge mit stationären Sensoren ausgestattet, wie in San Francisco.

Dynamische Informationen zur Parkplatzsituation im Straßenraum sind mehr und mehr nachgefragt. Die Mehrzahl der Apps auf dem Markt nutzt singuläre Ein- und Ausparkereignisse, die entweder direkt durch den Nutzer kommuniziert oder mit Hilfe eines Smartphones (DE 10 2012 212 347 A1) oder Sensoren erkannt werden sollen.

Um die Schätzung der Parkplatzverfügbarkeit zu verbessern ist eine Aussage zum aktuell vorliegenden Parksuchverkehr von entscheidendem Mehrwert. Viele Apps nutzen hierzu die Eingabe des Nutzers, ab wann er einen Parkplatz sucht.

Weiterhin ist in der DE 10 2012 201 472 A1 ein Verfahren zur Bereitstellung von Parkinformationen zu freien Parkplätzen beschrieben. Hierbei wird ein System zum Generieren von Parkinformationen verwendet. Bei diesem Verfahren wird der Parksuchverkehr bestimmt und in dem Verfahren als Eingangsgröße für das System verwendet.

Die Qualität von Community-basierten Apps ist stark abhängig von der Anzahl und Qualität der Eingaben der Nutzer. Daher ist ein automatisiert ablaufendes Verfahren wünschenswert.

Die Systeme, die bisher vorgestellt wurden haben einige Nachteile. Beispielsweise ist bei dem in der DE 10 2012 201 472 A1 vorgestellten System nachteilig, dass es stark von der Kalibrierung der Parameter abhängig ist. Zudem kann der Start des Parksuchverkehrs nur an zwei speziellen Punkten erkannt werden.

Zudem ist aus der WO 2010/023571 A1 ein Verfahren zur Schätzung der Parkzeit bekannt. Hierbei wird der Beginn eines Suchvorgangs nach einem Parkplatz bestimmt. Hierzu muss beispielsweise ein Fahrtmuster detektiert werden. Der Nutzer führt hierzu eine Vorrichtung mit sich, die zumindest den momentanen Ort und entsprechende Zeit erfasst. Zudem wird der Zeitpunkt des Parkens erfasst und zumindest die geschätzte Dauer des Suchvorgangs ermittelt. Diese geschätzte Dauer kann bei der Berechnung der Fahrtdauer von einem Anfangspunkt zu einem Ziel verwendet werden.

Aufgabe der vorliegenden Erfindung ist es daher eine Lösung zu schaffen, mittels derer auf einfache Weise der Beginn eines Parksuchverkehrs zuverlässig ermittelt werden kann.

Der Erfindung liegt die Erkenntnis zugrunde, dass diese Aufgabe gelöst werden kann, indem mit in dem Fahrzeug vorliegenden Daten eine vorläufige Bestimmung des Beginns des Parksuchverkehrs erfolgt und das vorläufige Ergebnis anschließend verifiziert wird.

Gemäß einem ersten Aspekt betrifft die Erfindung daher ein computerimplementiertes Verfahren zum Verarbeiten von Messdaten eines Fahrzeuges zur Bestimmung des Beginns einer Parkplatzsuche gemäß Anspruch 1.

Die Messdaten eines Fahrzeuges sind erfindungsgemäß Positionsdaten. Als Positionsdaten werden hierbei Koordinaten, insbesondere Längen- und Breitengradangaben für eine Position bezeichnet. Zusätzlich können die Positionsdaten einen Zeitstempel oder andere Zeitangaben über den Empfang oder das Ermitteln der Koordinaten enthalten. Diese Positionsdaten können über Global Positioning System (GPS) oder andere Positioniersysteme ermittelt werden. Diese Positionsdaten werden an dem Fahrzeug empfangen oder dort ermittelt. Zusätzliche Informationen, wie beispielsweise die Geschwindigkeit des Fahrzeuges, werden bei dem erfindungsgemäßen Verfahren nicht zur Bestimmung des Beginns einer Parkplatzsuche benötigt.

Der Beginn der Parkplatzsuche wird erfindungsgemäß auch als Beginn eines Parksuchverkehrs oder Erkennen eines Parksuchverkehrs bezeichnet. Der Beginn der Parkplatzsuche wird hierbei durch Positionsdaten zu der Position angegeben, an der sich das Fahrzeug beim Beginn der Parkplatzsuche befindet.

Die erfindungsgemäße Verarbeitung der Messdaten, die im Folgenden als Positionsdaten bezeichnet werden, kann in dem Fahrzeug oder in einer zu dem Fahrzeug separaten zentralen Rechnereinheit erfolgen. Bei der Verarbeitung im Fahrzeug erfolgt die Verarbeitung insbesondere in einer sogenannten On-Board-Unit. Die Verarbeitung in einer zentralen Rechnereinheit wird auch als off-board Verarbeitung bezeichnet.

Die allgemeine Idee, die erfindungsgemäß für die Parksuchverkehrerkennung verwendet wird, ist dass eine Parkplatzsuche, das heißt ein Parksuchverkehr sich durch Änderungen in dem Verhalten des Fahrers ausdrückt. Erfindungsgemäß wird daher davon ausgegangen, dass bei einer normalen Fahrt, die auch als Zielfahrt bezeichnet wird und bei der der Fahrer nicht nach einem verfügbaren Parkplatz sucht, der Fahrer die kürzeste Route zu seinem Zielort wählt. Von der Parkposition des Fahrzeuges aus rückwärts betrachtet, kann daher überprüft werden, ob es einen Zeitpunkt gibt, ab dem der Fahrer von diesem Verhalten drastisch abweicht.

Bei dem erfindungsgemäßen Verfahren wird hierzu zunächst eine Endposition des Fahrzeuges bestimmt. Die Endposition kann die tatsächliche Parkposition des Fahrzeuges, eine aktuelle Position auf dem Weg zu der Parkposition sein oder es kann eine Zielposition als Endposition verwendet werden. Im letzteren Fall wird davon ausgegangen, dass der Fahrer in der Nähe des von ihm angestrebten Ziel parken wird. Die Endposition wird erfindungsgemäß durch Positionsdaten, insbesondere Längen- und Breitengrad ausgedrückt. Vorzugsweise ist zusätzlich zu diesen Koordinaten eine Zeitangabe in den Positionsdaten zu der Endposition enthalten. Die Bestimmung der Endposition wird später noch genauer erläutert.

Die Bestimmung des Beginns einer Parkplatzsuche erfolgt bei dem erfindungsgemäßen Verfahren in zwei Stufen.

In einer ersten Stufe wird eine Ineffizienz identifiziert und in der zweiten Stufe wird eine so identifizierte Ineffizienz verifiziert.

Als Ineffizienz wird hierbei eine Abweichung von der kürzesten Verbindung zwischen einer Fahrtposition und der Parkposition bezeichnet.

Um eine Ineffizienz identifizieren zu können, wird zumindest ein Teil des Fahrtweges mit mindestens einer Luftlinienentfernung zu der Endposition verglichen und hierbei mindestens ein Ineffizienzwert bestimmt beziehungsweise berechnet. Durch diesen Ineffizienzwert kann dann eine Ineffizienz des Fahrtwegs identifiziert werden.

Der Fahrtweg stellt den tatsächlich vom Fahrzeug zurückgelegten Weg dar. Bei dem erfindungsgemäßen Verfahren kann der Fahrtweg durch eine Reihe aus aufeinanderfolgenden Positionen des Fahrzeuges ermittelt werden, an denen sich das Fahrzeug während der Fahrt befunden hat oder aktuell befindet. Die Positionen auf dem Fahrtweg, die auch als Fahrtpositionen bezeichnet werden können, werden bei dem erfindungsgemäßen Verfahren durch Positionsdaten, insbesondere Längen- und Breitegrade ausgedrückt. Diese Positionsdaten werden als Messdaten an dem Fahrzeug in regelmäßigen Zeitintervallen, beispielsweise jede Sekunde, empfangen oder ermittelt. Somit kann der Fahrtweg oder ein Teil des Fahrtweges durch die Summe der Abstände zwischen den einzelnen Fahrtpositionen ermittelt werden. Die Luftlinienentfernung zu der Endposition kann ebenfalls aus in dem Fahrzeug vorliegenden Werten ermittelt werden. Die Luftlinienentfernung zwischen der Fahrtposition und der Endposition wird rechnerisch ermittelt. Hierbei wird der kürzeste Abstand zwischen der ersten zu berücksichtigenden Fahrtposition und der Endposition berechnet.

Diese erste Stufe des Verfahrens kann somit ausschließlich unter Verwendung der Positionsdaten des Fahrzeuges erfolgen.

Erfindungsgemäß wird ein Ineffizienzwert berechnet, durch den eine gegebenenfalls vorliegende Ineffizienz des Fahrtweges identifiziert werden kann. Das Identifizieren erfolgt hierbei vorzugsweise durch Vergleich des Ineffizienzwertes mit einem vorgegebenen Schwellwert. Übersteigt der Ineffizienzwert den Schwellwert, so ist es möglich, dass ein Parksuchverkehr begonnen hat.

Bei dem erfindungsgemäßen Verfahren wird aber, wenn eine solche Ineffizienz identifiziert wurde, noch nicht von einem Parksuchverkehr ausgegangen. Vielmehr wird die identifizierte Ineffizienz verifiziert.

Zum Verifizieren einer identifizierten Ineffizienz wird erfindungsgemäß für mindestens eine Position, für die eine Ineffizienz identifiziert wurde, mittels Positionsdaten von einer Karte mindestens ein Streckenineffizienzwert bestimmt. Als Streckenineffizienzwert wird hierbei ein Wert bezeichnet, der ein Maß angibt, ob und in wieweit von einer anhand einer Karte ermittelten kürzesten Strecke abgewichen wird. Die anhand einer Karte ermittelte Strecke kann hierbei insbesondere eine durch ein Navigationssystem ermittelte Streckenführung, die auch als Fahrtroute oder Route bezeichnet werden kann, darstellen. Hierbei wird nicht nur das Vorhandensein von Strassen berücksichtigt, sondern gegebenenfalls auch die Nutzbarkeit der Strasse für den geplanten Fahrtweg. Beispielsweise können bei einer Streckenführung Hindernisse, wie Einbahnstrassen und dergleichen berücksichtigt werden. In einer einfachen Ausführungsform ist es aber auch ausreichend, wenn lediglich das Vorhandensein einer Strasse anhand der Kartendaten überprüft wird und entsprechend dieser Kartendaten die kürzeste Strecke berechnet wird. Kartendaten stellen hierbei digitale Kartenpositionsdaten dar. Diese sind vorzugsweise wie auch die Positionsdaten des Fahrzeuges als Koordinaten, insbesondere in Längen- und Breitengeraden angegeben. Hierdurch kann ein Vergleich zwischen den Fahrtpositionen und der Karte auf einfache Weise erfolgen. Die Kartendaten liegen in dem Fahrzeug, beispielsweise in einem Navigationssystem vor oder es kann auf diese Daten zugegriffen werden. Zudem ist durch ein Navigationssystem eines Fahrzeuges die sogenannte Routing-Fähigkeit gegeben, das heißt die kürzestes Strecke wird als Streckenführung zwischen einer Fahrtposition und der Endposition kann durch das Navigationssystem bestimmt werden und für das erfindungsgemäße Verfahren zur Verfügung gestellt werden. Die Begriffe Strecke auf der Karte und Streckenführung werden im Folgenden sofern nicht anders angegeben als Synonyme verwendet.

Indem bei dem erfindungsgemäßen Verfahren das Abweichen von einer Strecke oder Streckenführung, die anhand von Kartendaten ermittelt wurde, überprüft wird, kann festgestellt werden, ob die ursprünglich identifizierte Ineffizienz, das heißt die Abweichung von dem kürzesten Abstand zu der Endposition, durch den Straßenverlauf bedingt ist.

Überschreitet der Streckenineffizienzwert einen vorgegebenen Schwellwert, so liegt eine Streckenineffizienz vor, das heißt der Fahrer weicht von der kürzesten Strecke oder Streckenführung zu der Endposition ab und es kann zuverlässig von einem Parksuchverkehr ausgegangen werden.

Bei dem erfindungsgemäßen Verfahren wird die Verifizierung einer Ineffizienz nur für die Position oder die Positionen durchgeführt, für die eine Ineffizienz identifiziert worden war. Insbesondere wird die Verifizierung nur für die Punkte durchgeführt, an denen der Ineffizienzwert einen Schwellwert überschreitet. Dies weist den Vorteil auf, dass der Rechenaufwand zur Bestimmung des Parksuchverkehrs minimiert werden kann. Insbesondere ist es nicht erforderlich für alle Fahrtpositionen des Fahrtweges einen Vergleich zu einer Strecke oder Streckenführung auf einer Karte durchzuführen.

Da im Gegensatz zum Stand der Technik bei der vorliegenden Erfindung lediglich Positionsdaten zur Ermittlung der Ineffizienz verwendet werden und darüber hinaus, ein Vergleich mittels Kartendaten nur bei Erkennen einer Ineffizienz erfolgt, ist die Rechnerleistung, die zur Durchführung des Verfahrens erforderlich ist, minimiert. Insbesondere ist kein ständiger Abgleich der Fahrtpositionen mit Kartendaten erforderlich. Zudem ist auch eine aufwändige Bestimmung von Merkmalen oder Vektoren für jede Fahrtposition nicht erforderlich. Das Verfahren kann somit auch auf einem in dem Fahrzeug vorgesehenen Gerät, beispielsweise einer sogenannten Onboard-Unit, ausgeführt werden, das heißt es kann eine onboard Ermittlung des Parksuchverkehrs und insbesondere des Beginns der Parkplatzsuche erfolgen. Zudem kann das Verfahren auch online, das heißt während der Fahrt durchgeführt werden.

Das Erkennen des Parksuchverkehrs umfasst gemäß der vorliegenden Erfindung vorzugsweise die Ausgabe einer Information über zumindest die Position, an der der Parksuchverkehr begonnen hat. Diese Information kann beispielsweise einen Index darstellen, der Koordinaten und eine Zeitangabe, wann die Position durchfahren wurde, umfasst. Zudem können entsprechende Informationen auch bezüglich des betrachteten Endpunktes ausgegeben werden. Diese Informationen können onboard verarbeitet, gespeichert und/oder einer externen Rechnereinheit zur weiteren Verarbeitung zur Verfügung gestellt werden.

Gemäß einer bevorzugten Ausführungsform werden die Ineffizienzwerte als eine Ineffizienzkurve berechnet. Hierbei wird vorzugsweise für jede Fahrtposition des Teils des Fahrtweges, der überprüft werden soll, ein Ineffizienzwert bestimmt. Indem die Ineffizienzwerte als Ineffizienzkurve berechnet werden, kann ein kurzfristiges Abweichen von dem normalen Fahrverhalten erkannt und für die weitere Betrachtung außer Acht gelassen werden.

Vorzugsweise gilt aber bei Überschreiten eines maximalen Wertes der Ineffizienzkurve für eine Fahrtposition über einen Schwellwert eine Ineffizienz für diese Position als identifiziert. Um zuverlässig den tatsächlichen Beginn der Parksuche bestimmen zu können, wird vorzugsweise zunächst die Position bestimmt, an der der Ineffizienzwert maximal ist. Hierbei werden von der Endposition aus rückwärts die einzelnen Fahrtpositionen berücksichtigt. Ist ein maximaler Wert selektiert worden, wird dieser gegen einen Schwellwert verglichen. Überschreitet der Ineffizienzwert den Schwellwert kann von einer Ineffizienz ausgegangen werden. Um aber die Zuverlässigkeit des Verfahrens weiter zu steigern, können bei Identifizieren einer Ineffizienz für eine Position von dieser Position aus vor dieser Position liegende weitere Fahrtpositionen überprüft werden. Ergibt sich für eine vor dieser Position liegende weiter Fahrtposition ebenfalls ein maximaler Ineffizienzwert, der einen Schwellwert überschreitet, wird für diese weitere Fahrtposition eine Ineffizienz identifiziert und diese weitere Fahrtposition wird als möglicher Beginn der Parksuche angesehen..

Die Positionen an denen eine Ineffizienz als identifiziert gilt, werden erfindungsgemäß gespeichert, um für die weiteren Verfahrensschritte zur Verfügung zu stehen. Somit können nach Ermittlung der ersten Fahrtposition von der Endposition aus rückwärts betrachtet, bei der eine Ineffizienz als identifiziert gelten könnte, auf einfache Weise auch die vor dieser identifizierte Position auf Ineffizienz überprüft werden.

Gemäß einer bevorzugten Ausführungsform wird zum Bestimmen des Ineffizienzwertes der Quotient aus der Differenz aus dem Abstand einer vorherigen Position zu der Endposition und der Luftlinienentfernung der vorherigen Position zu der Endposition zu der Differenz aus dem Abstand einer vorherigen Position zu der Endposition berechnet.

Unter vorheriger Position, die auch als vorherige Fahrtposition bezeichnet werden kann, wird hierbei eine Fahrtposition verstanden, die zeitlich vor der Endposition von dem Fahrzeug durchfahren wird oder wurde.

Der Abstand zwischen der vorherigen Fahrtposition und der Endposition wird durch Summierung der Abstände zwischen den einzelnen Fahrtpositionen, die zwischen dieser vorherigen Fahrtposition und der Endposition liegen, ermittelt. Die Luftlinienentfernung zu der Endposition wird für jede einzelne Fahrtposition als kürzester Abstand zwischen der jeweiligen Fahrtposition und der Endposition berechnet. Indem der Quotient aus der Differenz zwischen gefahrener Strecke und Luftlinie und der gefahrenen Strecke gebildet wird, wird eine relative Abweichung von der Luftlinie bestimmt. Dieser Wert kann durch Vergleich mit einem Schwellwert zur Identifizierung einer Ineffizienz verwendet werden.

Vorzugsweise wird vor dem Vergleich mit einem Schwellwert die Position ermittelt, an der der Ineffizienzwert ein Maximum erreicht. Der Ineffizienzwert dieser Position wird dann mit dem Schwellwert verglichen und bei Überschreiten des Schwellwertes kann eine Ineffizienz als identifiziert gelten. Wie oben bereits beschrieben, kann der Verfahrensschritt zum Identifizieren einer Ineffizienz und Ermittlung des möglichen Parksuchverkehrs aber auch nach Identifizieren einer Ineffizienz für eine Fahrtposition fortgesetzt werden. Hierbei können für die weiter von der Endposition entfernten Fahrpositionen die Ineffizienzwerte verwendet werden, die in dem ersten Verfahrensschritt für alle Fahrtpositionen ermittelt wurde. Alternativ ist es aber auch möglich, dass die Bestimmung des Maximums des Ineffizienzwertes durch Verwendung der zuvor identifizierten Position, an der Ineffizienz angenommen werden kann, als Endposition durchgeführt wird. Wird bei dieser Betrachtung eine vor der ersten als ineffizient identifizierten Position liegende Fahrtposition erkannt, an der der Ineffizienzwert maximal ist, so wird dieser Ineffizienzwert gegen den Schwellwert verglichen und bei Überschreiten des Schwellwertes wird diese frühere Fahrtposition als möglicher Beginn der Parksuche verwendet. Das Verfahren wird solange durchgeführt, bis eine Position identifiziert wird, die den Fahrtweg in zwei Teile, einen effizienten und einen ineffizienten Weg teilt. Diese Position kann somit eventuell den Beginn des Parksuchverkehrs, darstellen. Der Teil des Fahrtweges nach dieser Position, das heißt zwischen Beginn des Parksuchverkehrs und der Endposition, wäre dann der Parksuchverkehr und der Teil des Fahrtweges vor dieser Position, das heißt vor dem Beginn des Parksuchverkehrs wäre dann der sogenannte Zielverkehr. Diese Annahmen werden bei dem erfindungsgemäßen Verfahren aber durch das Verifizieren der Ineffizienz erneut überprüft.

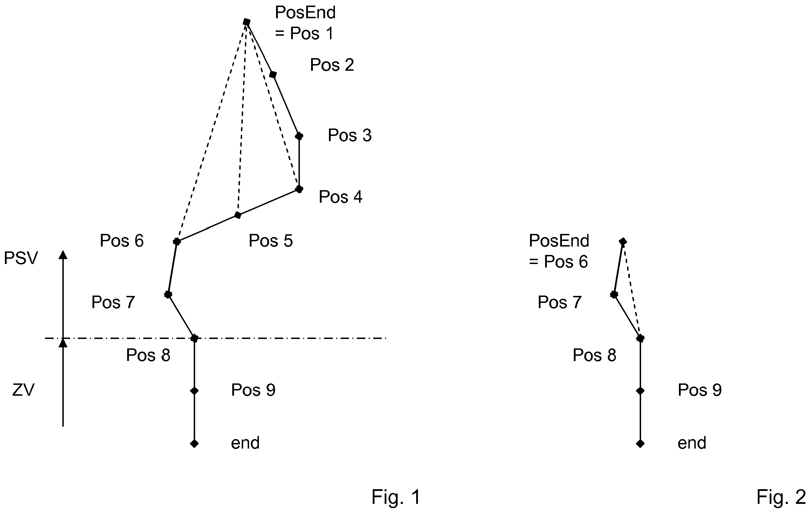

Das Verfahren zur Bestimmung der Ineffizienzwerte und Fortführen des Verfahrens nach dem Erkennen eines maximalen Ineffizienzwertes, der über einem Schwellwert liegen, ist schematisch in den Figuren 1 und 2 gezeigt. In den Figuren ist der Fahrtweg durch durchgezogene Linie dargestellt und die Luftlinienentfernung einiger Fahrtpositionen zu der Endposition (PosEnd) ist durch gestrichelte Linien angedeutet.

In der Figur 1 ist die Endposition PosEnd mit Pos 1 bezeichnet. Diese Endposition kann die tatsächliche Parkposition, eine aktuelle Fahrtposition oder die Zielposition darstellen. Die vor der Endposition Pos 1 durchfahrenen Fahrtpositionen sind mit Pos 2 bis end bezeichnet. Dabei steigt die Nummerierung von der Endposition aus, da bei dem erfindungsgemäßen Verfahren vorzugsweise von der Endposition aus begonnen wird, das heißt die Fahrtpositionen in der Reihenfolge entgegen der Fahrtrichtung betrachtet werden. In der dargestellten Ausführungsform der Figur 1 wird beispielsweise bei der Position Pos 6 ein maximaler Ineffizienzwert erkannt, der über einem vorgegebenen Schwellwert liegt. Somit könnte der Parksuchverkehr bei der Position Pos 6 begonnen haben. Vorzugsweise wird dieses Ergebnis aber weiter überprüft. Eine Ausführungsform hierzu ist in der Figur 2 gezeigt. Hierbei wird die als möglicher Beginn identifizierte Position Pos 6 als Endposition (PosEnd) betrachtet und für die weiteren Positionen Pos 7 bis end die Ineffizienzwerte bestimmt. Hierbei ergibt sich in der dargestellten Ausführungsform, dass bei der Position Pos 8 ein maximaler Ineffizienzwert, der einen vorgegebenen Schwellwert überschreitet, vorliegt. Somit wird statt der ursprünglichen Position Pos 6 die Pos 8 als der mögliche Beginn des Parksuchverkehrs betrachtet.

Die Unterteilung des Fahrtweges in Parksuchverkehr (PSV) und Zielverkehr (ZV) ist schematisch in Figur 1 angedeutet.

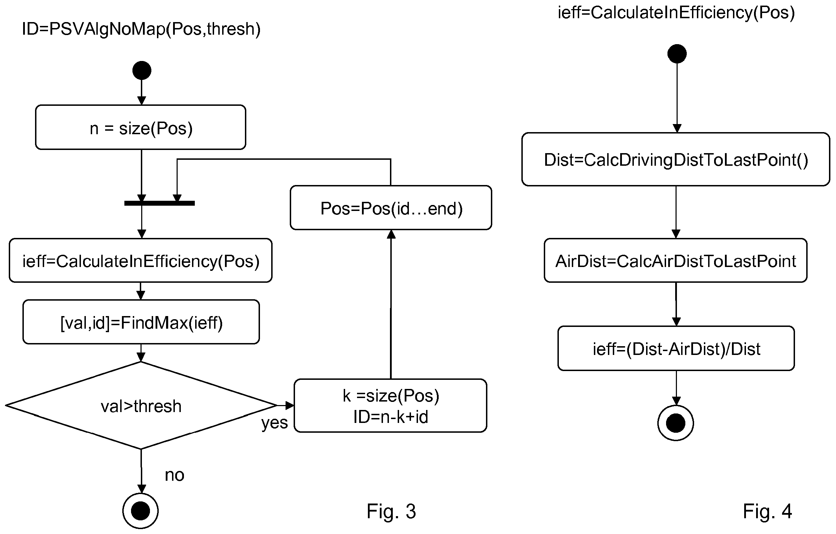

Die Schritte zur Berechnung der Ineffizienzwerte und der Identifizierung von Ineffizienz gemäß einer bevorzugten Ausführungsform lassen sich durch das Flussdiagramm, das in Figur 3 gezeigt ist, darstellen. Hierbei ist in dem linken Ast des Flussdiagramms das Bestimmen des maximalen Ineffizienzwertes und der Vergleich mit dem Schwellwert angegeben und in dem rechten Ast die Rückkopplung gezeigt, ob vor eines so identifizierten möglichen Beginns der Parksuche eine weitere Position liegt, bei der Ineffizienz identifiziert wird.

Indem für die Bestimmung der Ineffizienz lediglich die Positionsdaten der Fahrtpositionen und der Endposition notwendig sind, ist eine andauernde Streckenführung (Routing) bei dem erfindungsgemäßen Verfahren nicht erforderlich. Zudem sind die Ermittlung des Fahrtweges und des Luftlinienabstandes einfache Berechnungen, die nur einen geringen Rechenaufwand verursachen. Schließlich ist der Speicherbedarf des Speichers, in dem die für diese Art der Ineffizienzberechnung notewendigen Daten gespeichert sind, gering. Insbesondere ist eine Speicherung der Geschwindigkeit der Richtungsänderung und dergleichen, nicht erforderlich.

Zur Bestimmung des Streckenineffizienzwertes wird vorzugsweise der Quotient aus der Differenz aus dem Abstand einer vorherigen Position zu der Endposition und der Entfernung der vorherigen Position zu der Endposition auf einer Strecke einer Karte zu der Differenz aus dem Abstand einer vorherigen Position zu der Endposition berechnet.

Auch diese Abstände sind auch einfache Weise zu berechnen und bedürfen nur eines geringen Rechenaufwandes und geringer Speicherkapazität.

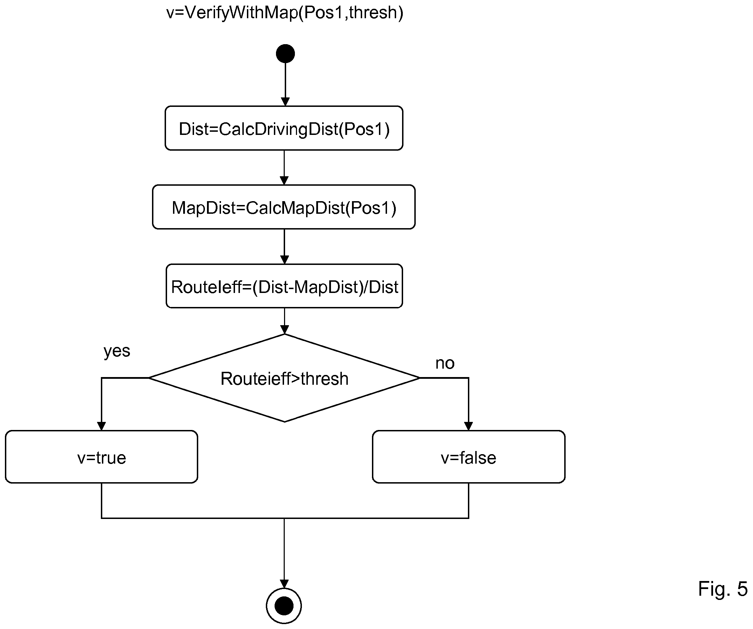

Die Verifizierung der Ineffizienz gegen die Kartendaten insbesondere die Strecke auf der Karte ist schematisch in Figur 5 gezeigt. Hierbei wird eine zuvor als ineffizient identifizierte Fahrtposition (in der Figur 5 als Pos1 angegeben) verwendet. Von dieser Fahrtposition Pos 1 wird zum einen die tatsächlich gefahrene Entfernung, das heißt der Fahrtweg, der den tatsächlich gefahrenen Abstand angibt, und zum anderen der Abstand entlang einer Strecke oder einer Streckenführung auf der Karte von Pos1 zu der Endposition berechnet. Aus diesen beiden Werten wird die Streckenineffizienz für die Position Pos1 bestimmt und diese gegen einen Schwellwert verglichen.

Nur wenn auch diese Verifizierung zu dem Ergebnis führt, dass die Streckenineffizienz über dem Schwellwert liegt, so wird von einem Parksuchverkehr ab diesem Punkt, das heißt dieser Position ausgegangen. Liegt die Ineffizienz hingegen unterhalb des Schwellwertes, so gilt als erkannt, dass die ursprünglich erkannte Ineffizienz der Straßenführung zuzuschreiben ist, das heißt der Fahrer keine effizientere Strecke hätte nehmen können.

Bei der Verifizierung wird somit der aus den Fahrtpositionen berechnete Abstand, nicht wie in der Berechnung der Ineffizienzwerte gegen die Luftlinienentfernung verglichen sondern gegen einen Abstand, der anhand der Kartendaten ermittelt wird. Dieser Abstand, der anhand der Kartendaten ermittelt wird, stellt vorzugsweise die Streckenführung dar, die beispielsweise durch ein Navigationssystem bestimmt wurde.

Vorzugsweise erfolgt das Verifizieren nur bezüglich der ersten Position des Fahrtweges in Fahrtrichtung, an der eine Ineffizienz identifiziert wurde, das heißt bezüglich der ersten Position auf dem Fahrtweg, an der der Beginn des Parksuchverkehrs angenommen wird. Es ist aber auch möglich, dass die Verifizierung bezüglich aller Fahrtpositionen, an denen eine mögliche Ineffizienz identifiziert wurde, an der der Ineffizienzwert größer als ein Schwellwert ist, erfolgt. Als erste Position des Fahrtweges in Fahrtrichtung, an der eine Ineffizienz identifiziert wurde, wird die Position bezeichnet, die zeitlich den größten Abstand zu der Endposition aufweist. Wie oben beschrieben, wird bei dem erfindungsgemäßen Verfahren das Identifizieren von einer Position, an der Ineffizienz vorliegt, in der Reihenfolge der Fahrtpositionen entgegen der Fahrtrichtung vorgenommen. Wird auf diese Weise eine Position identifiziert, so wird vorzugsweise in der Richtung gegen die Fahrtrichtung auf das mögliche Vorliegen einer weiteren Position an der Ineffizienz vorliegt überprüft. Die bei diesem Verfahren zuletzt gefundene Position stellt somit die erste Position des Fahrtweges in Fahrtrichtung dar. Die für diese Position identifizierte Ineffizienz wird dann verifiziert.

Gemäß einer bevorzugten Ausführungsform werden die Positionsdaten vor dem Vergleich mit der Luftlinienentfernung durch Überprüfen der Zugehörigkeit zu einer definierten Region gefiltert.

Indem vor der Bestimmung der Ineffizienz eine Filterung der Positionsdaten erfolgt, kann zum einen der Speicherbedarf für das erfindungsgemäße Verfahren verringert werden. Zum anderen kann aber auch die Genauigkeit des Ergebnisses des erfindungsgemäßen Verfahrens gesteigert werden und der Berechnungsaufwand minimiert werden.

Da bei dem erfindungsgemäßen Verfahren lediglich die Positionsdaten, insbesondere Längen- und Breitengrad, für die Bestimmung des Parksuchverkehrs verwendet werden, werden die Positionsdaten vorzugsweise bezüglich mindestens eines Kriteriums, das sich aus den Positionsdaten ableiten lässt, gefiltert. Aus diesem Grund werden die Positionsdaten, die an dem Fahrzeug, beispielsweise mittels GPS erfasst werden, vorzugsweise bezüglich deren relativen Position zu der Endposition, insbesondere bezüglich des Abstandes zu der Endposition gefiltert. Somit werden nur Positionsdaten verwendet, die innerhalb einer definierten Region zu der Endposition liegen. Die Region innerhalb derer die Positionsdaten um die Endposition liegen müssen, kann beispielsweise durch eine Kreis mit einem definierten Durchmesser um die Endposition definiert sein. Hierdurch wird die Menge an Positionsdaten, die zu verarbeiten ist, minimiert.

Vorzugsweise werden zudem nur kontinuierliche Positionsdaten in der definierten Region für den Vergleich herangezogen. Weiter bevorzugt wird lediglich der letzte Satz von kontinuierlich erfassten Positionsdaten für den Vergleich herangezogen. Die Positionsdaten sind hierzu vorzugsweise mit Zeitstempeln versehen. Somit kann erkannt werden, welche Positionsdaten aufeinanderfolgend erfasst oder empfangen wurden und so der letzte kontinuierlich erfasste Satz an Positionsdaten vor der Endposition ermittelt werden.

Gemäß einer bevorzugten Ausführungsform wird die definierte Region, innerhalb derer die zu berücksichtigenden, das heißt nicht ausgefilterten Positionsdaten liegen müssen, als Rechteck definiert. Das Rechteck weist eine definierte Seitenlänge auf. Die Verwendung eines Rechtecks, vorzugsweise Quadrates für den Bereich, innerhalb dessen die zu berücksichtigenden Positionsdaten liegen müssen, weist den Vorteil auf, dass dieser Bereich mit geringem Rechenaufwand bestimmt werden kann und die Zugehörigkeit von Fahrtpositionen zu der definierten Region auf einfache Weise bestimmt werden kann.

Die definierte Region und vorzugsweise das Recheck wird vorzugsweise um die aktuelle Position des Fahrzeuges definiert. Die aktuelle Position befindet sich daher in der Flächenmitte der Region, insbesondere des Rechtecks. Auf diese Weise wird eine möglichst große Menge an Fahrtpositionen, die vor der aktuellen Fahrtposition liegen, von der Region erfasst und bei der Bestimmung der Ineffizienz berücksichtigt. Für die Ermittlung des Ineffizienzwertes wird hierbei die aktuelle Position als Endposition betrachtet.

Das erfindungsgemäße Verfahren kann online durchgeführt werden, das heißt in Echtzeit während der Fahrt erfolgen. Alternativ ist es aber auch möglich das Verfahren nach Beendigung der Fahrt durchzuführen. In diesem Fall wird das Verfahren als offline, das heißt der Fahrt nachgelagert, bezeichnet.

Gemäß einer Ausführungsform wird das erfindungsgemäße Verfahren während der Fahrt des Fahrzeuges durchgeführt und die Endposition entspricht dem Fahrtziel. Bei dieser Ausführungsform ist eine Streckenführung, beispielsweise durch ein Navigationssystem erforderlich, in das der Fahrer das gewünschte Fahrziel eingibt. Das Fahrziel kann aus dem Navigationssystem ausgelesen werden. Da davon ausgegangen wird, dass die Parkposition an oder in der Nähe des Fahrziels liegt, ist die Verwendung des angegebenen Fahrziels als Endposition ausreichend genau, um einen Parksuchverkehr erkennen zu können. Alternativ ist es aber bei einer Durchführung des Verfahrens während der Fahrt auch möglich, dass statt einem von dem Fahrer eingegebenen Fahrtziel die aktuelle Position des Fahrzeuges als Endposition verwendet wird. Bei dieser Ausführungsform wird somit vorzugsweise während der Fahrt die Bestimmung ob ein Parksuchverkehr vorliegt, fortlaufend durchgeführt. Beim Erreichen einer Parkposition wird diese letzte aktuelle Fahrtposition als Endposition verwendet und dann das erfindungsgemäße Verfahren mit dieser Endposition durchgeführt.

Gemäß einer alternativen Ausführungsform wird das erfindungsgemäße Verfahren nach Beendigung der Fahrt des Fahrzeuges durchgeführt wird und die Endposition entspricht der tatsächlichen Parkposition. Da nach Beendigung der Fahrt die Parkposition bekannt ist, kann diese bei einem sogenannten Off-line-Verfahren als Endposition verwendet werden.

Bei dieser Ausführungsform können die über den Fahrtweg gesammelten Positionsdaten verwendet werden. Da die Endposition festliegt, ist daher ein einmaliges Bestimmen des Parksuchverkehrs ausreichend und der Rechenaufwand daher weiter verringert.

Wird mit dem erfindungsgemäßen Verfahren ein Parksuchverkehr erkannt, das heißt der Beginn der Parksuche ausgegeben, so kann diese Angabe zu unterschiedlichen Zwecken weiter verwendet werden. Beispielsweise können diese Angaben für eine Prognose von Parkinformationen oder für Stadtplaner von Bedeutung sein. Hierbei kann beispielsweise das in der DE 10 2012 201 472 A1 beschriebene Verfahren zur Bereitstellung von Parkinformationen zu freien Parkplätzen verwendet werden und das Ergebnis des erfindungsgemäßen Verfahrens kann dort als Eingangsgröße verwendet werden. Es ist aber auch möglich das Ergebnis des erfindungsgemäßen Verfahrens für andere Verfahren zur Berechnung oder Bereitstellung von Parkplatzinformationen zu nutzen. Das Ergebnis des erfindungsgemäßen Verfahrens wird vorzugsweise als Information bezüglich der Position des Beginns der Parksuche zusammen mit einer Zeitangabe über den Beginn der Parksuche und entsprechenden Informationen zu der Endposition ausgegeben. Die Informationen bezüglich des Beginns der Parksuche und gegebenenfalls auch der Endposition können als Index (ID) ausgegeben werden.

Gemäß einem weiteren Aspekt betrifft die Erfindung ein Computerprogrammprodukt, das in einen digitalen Rechner oder Rechnersystem, insbesondere in den internen Speicher, geladen werden kann und Softwarecodeabschnitte umfasst, mit denen die Schritte des erfindungsgemäßen Verfahrens ausgeführt werden, wenn das Produkt auf dem Rechner oder Rechnersystem läuft.

Die Softwarecodeabschnitte können auch als Algorithmus bezeichnet werden. Vorzugsweise umfasst das Computerprogrammprodukt zumindest zwei Sektionen, wobei eine Sektion den Schritt des Erfassens und vorzugsweise Filterns von Fahrtpositionsdaten darstellt und die zweite Sektion der Bewertung des Parksuche, das heißt der Bestimmung eines Parksuchverkehrs dient. Die erste Sektion kann daher auch als Tracelogger und die zweite Sektion als ParkSearchEvaluation bezeichnet werden. Die beiden Sektionen des Computerprogrammprodukts, die vorzugsweise Softwarecodeabschnitte darstellen, sind vorzugsweise so miteinander verbunden, dass die Ergebnisse des Traceloggers mittelbar oder unmittelbar dem ParkSearchEvaluation zur Verfügung gestellt werden können. Besonders bevorzugt werden die Ergebnisse des Traceloggers dem ParkSearchEvaluation mittelbar zur Verfügung gestellt und insbesondere zunächst in einem Speicher abgelegt, der vorzugsweise einen First-In-First-Out (FIFO) Speicher darstellt.

Das Computerprogrammprodukt und insbesondere die Softwarecodeabschnitte weisen vorzugsweise mindestens eine Schnittstelle zu einem Navigationssystem des Fahrzeuges auf. Diese Schnittstelle kann als ein Abrufbefehl in dem Softwarecodeabschnitt hinterlegt sein. Über diese Schnittstelle, kann eine für das erfindungsgemäße Verfahren notwendige Strecke oder Streckenführung oder andere Kartendaten von dem Navigationssystem abgefragt werden. Insbesondere ist eine solche Schnittstelle für den Softwarecodeabschnitt ParkSearchEvaluation vorgesehen. In dem ParkSearchEvaluation werden die beiden Stufen des erfindungsgemäßen Verfahrens, die als Identifizieren einer Ineffizienz und Verifizieren des Ergebnisses bezeichnet werden können, durchgeführt.

Der oder die Softwarecodeabschnitt(e) können erfindungsgemäß vorzugsweise auf die Längen- und Breitengrade der Positionen des Fahrzeuges mit einer Frequenz von beispielsweise einer Sekunde zugreifen. Zudem kann der Softwarecodeabschnitt auch eine Funktion umfassen, die die Berechnung des gerouteten Abstandes innerhalb einer Karte von zwei Positionen erlaubt oder die auf eine solche Funktion zugreifen.

Vorteile und Merkmale, die bezüglich des erfindungsgemäßen Verfahrens beschrieben werden, gelten - soweit anwendbar - ebenfalls für das erfindungsgemäße Computerprogrammprodukt und umgekehrt. Die Vorteile und Merkmale werden hierbei gegebenenfalls nur einmalig beschrieben.

Die Erfindung wird nun erneut unter Bezugnahme auf die Figuren und die darin gezeigten möglichen Ausführungsformen beschrieben.

Bei dem erfindungsgemäßen Verfahren werden zwei parallele Prozesse durchgeführt, die beispielsweise von parallelen Softwarecodeabschnitten durchgeführt werden können. Zum einen wird der Fahrtweg, der auch als Trace oder Pfad bezeichnet werden kann, gespeichert. Das Speichern wird auch als Loggen bezeichnet. Der eine Prozess des erfindungsgemäßen Verfahrens beziehungsweise des Algorithmus, wird daher auch als Tracelogger bezeichnet. Der zweite Prozess wird als Parksuchverkehrbewertung oder ParkSearchEvaluation bezeichnet.

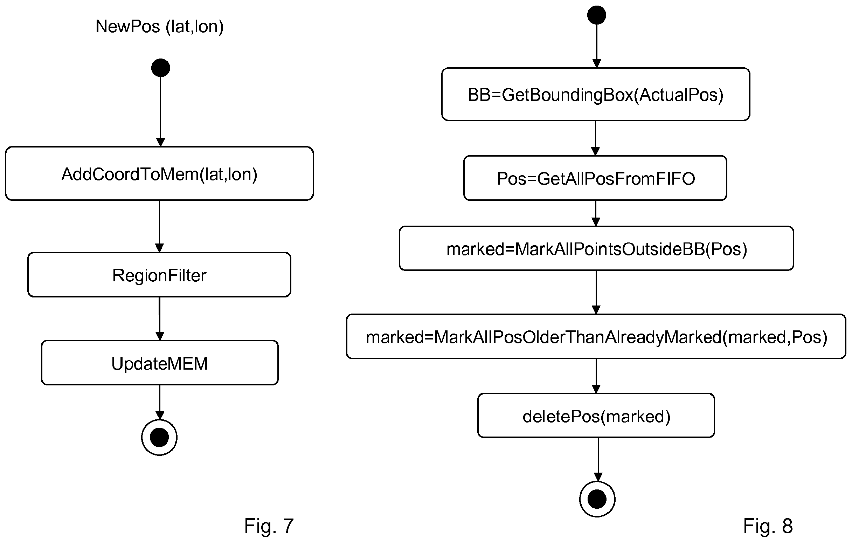

Bei dem Prozess des Traceloggers werden Fahrtwegdaten, die auch als Trace-Daten bezeichnet werden können und insbesondere Positionsdaten in Form von Koordinaten, gegebenenfalls mit Zeitstempel darstellen, aus der Vergangenheit bis zur Gegenwart analysiert. Um den Speicherbedarf gering zu halten, wird ein First-in-First-out (FIFO) Speicher ausgelegt, der nur Längen- und Breitengrade behält, die für die Verwendung in dem erfindungsgemäßen Verfahren relevant sind. Immer wenn eine neue Fahrtposition, das heißt die Koordinaten einer neuen Fahrtposition, aufgenommen wird, fügt der Tracelogger die Koordinate zu dem FIFO hinzu und wendet dann einen Filter an, der auch als Region-Filter bezeichnet wird, um irrelevante Daten zu löschen. Dies ist durch das Flussdiagramm in Figuren 7 und 8 verdeutlicht.

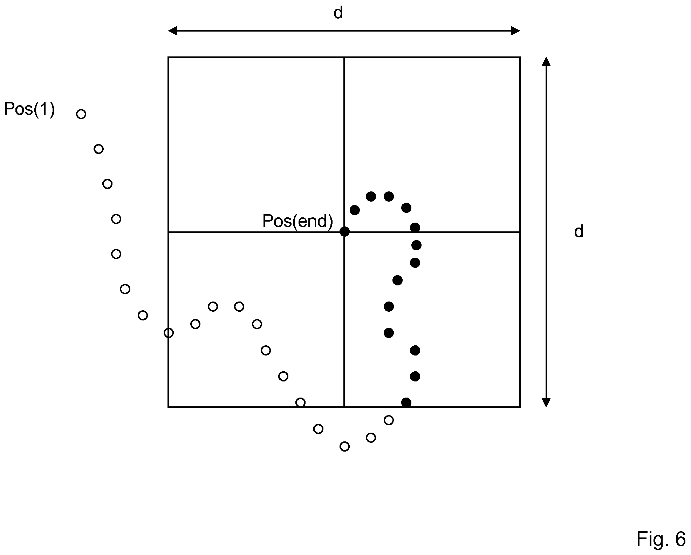

Wie der Name bereits anzeigt, filtert der Region-Filter Positionen, die im Folgenden auch als Punkte bezeichnet werden, heraus, die außerhalb eines vorbestimmten Bereiches um die aktuelle Position liegen. Aus Gründen der Einfachheit wird dieser Bereich als eine Bounding-Box mit einer Kantenlänge von d km definiert. Weiterhin wird nur der letzte kontinuierliche Bereich von aufeinander folgenden Punkten behalten. Als ein Ergebnis, enthält der FIFO nur einen kontinuierlichen Satz von Positionen, die den relevanten Fahrtweg oder Trace bilden. Dies ist in Figur 6 schematisch gezeigt.

Die implizite Annahme ist hierbei, dass die Parksuchverkehrweg vollständig in der Bounding Box liegt und dementsprechend auch das Fahrtziel, das in der Regel in der Nähe der Parkposition liegt, in der BoundingBox liegt.

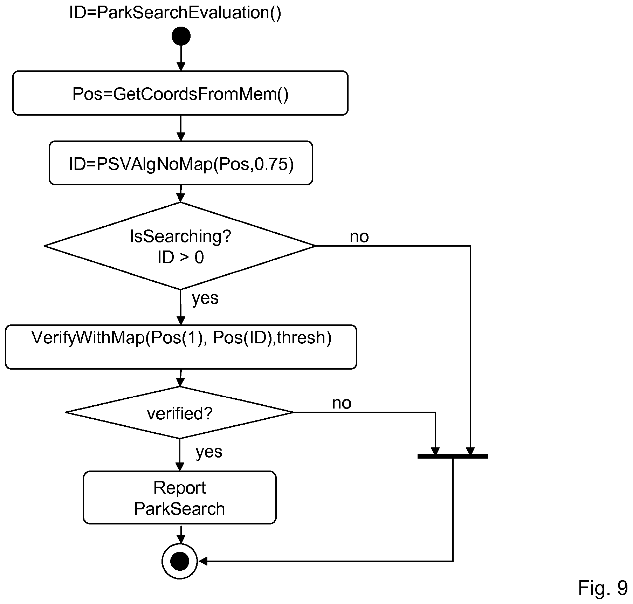

Der zweite Prozess des erfindungsgemäßen Verfahrens oder Algorithmus, der auch als Parksuchbewertungsvorgang bezeichnet wird, wird entweder am Ende einer Fahrt oder periodisch in vorbestimmten Zeitintervallen während der Fahrt ausgelöst. Der Parksuchbewertungsvorgang analysiert die Spur in dem FIFO und liefert eine Kennung des Punktes, das heißt der Position, an dem Parksuchverkehr erkannt wurde. Die Grundschritte des Verfahrens sind in Figur 9 gezeigt.

In einem ersten Schritt werden alle Punkte von dem FIFO Speicher abgerufen. Da in diesem nur die durch den RegionFilter gefilterten Punkte gespeichert sind, werden nur die letzten kontinuierlichen Punkte innerhalb der vorgegebenen Distanz, insbesondere innerhalb der BoundingBox abgerufen. Dieser Schritt ist mit Pos=GetCoordsFromMem in Figur 9 bezeichnet. In einem nächsten Schritt wird ein erster Identifikationsschritt zum Identifizieren ineffektivem Fahren zur Bestimmung des Parksuchverkehrs durchgeführt. Dieser erste Identifikationsschritt wird ohne Verwendung der Karte durchgeführt. Dieser Schritt ist in Figur 9 als ID=PSVAIgNoMap bezeichnet. Da die erste Identifikation der Ineffizienz zur Bestimmung des Parksuchverkehrs ohne die Verwendung von Kartendaten erfolgt, kann Rechenzeit gespart werden. In einem weiteren Schritt wird, sofern in dem ersten Identifikationsschritt eine Ineffizienz erkannt wurde, verifiziert, ob die Ineffizienz, die zu der Identifikation des Parksuchverkehrs führen könnte, durch die Karte, das heißt die Straßenverläufe in der Karte und vorzugsweise auch durch die Streckenführung, beispielsweise eines Navigationssystems erklärt werden kann. Dieser Verifikationsschritt wird in Figur 9 als VerifyWithMap bezeichnet. Sofern die Ineffizienz nicht durch die Karte erklärt werden kann, gilt der Parksuchverkehr als erkannt und Parksuchverkehr wird berichtet, das Informationen zu Position und Zeit des Beginns des Parksuchverkehrs und der Endposition werden ausgegeben oder gespeichert. Dieser Schritt ist in Figur 9 als ReportParkSearch bezeichnet.

In dem ersten Identifikationsschritt PSVAIgNoMap, wird eine Ineffizienzkurve aus den Fahrtwegdaten berechnet, die definiert ist als:

$$ieff = \frac{Dist - AirDist}{Dist}$$

wobei Dist die Fahrdistanz zwischen den vorherigen Positionen und der Endposition P und AirDist die Entfernung in Luftlinie ist. Dann wird die Position Pin mit maximaler Ineffizienz bestimmt. Wenn die Ineffizienz an diesem Punkt größer als ein bestimmter Schwellwert ist, wird Parksuchverkehr angenommen. Dieser Vorgang wird wiederholt mit P=Pin bis der Fahrtweg in dessen effizienten und ineffizienten Teil geteilt werden kann. Das Diagramm in Figuren 3 und 4 illustriert diesen Vorgang.

Sobald in dem Schritt PSVNoMap ineffizientes Fahren erkannt wurde zwischen Punkt P und Pend, verifiziert der Schritt VerifyWithMap ob die erkannte Ineffizienz durch die Karte erklärt werden kann. Dabei wird die Streckenineffizienz (Routeieff) nur für P erneut berechnet. Statt die Entfernung in Luftlinie zu verwenden, wird der kürzeste Weg auf der Karte verwendet. Nur wenn die Ineffizienz nicht durch die Karte erklärt werden kann, das heißt zusätzlich zu der Ineffizienz auch eine Streckenineffizienz vorliegt, berichtet der Algorithmus Parksuchverkehr.

Die vorliegende Erfindung weist eine Reihe von Vorteilen auf. Insbesondere kann mit dem vorliegenden Verfahren und Computerprogrammprodukt auf einfache Weise eine zuverlässige Bestimmung des Parksuchverkehrs erfolgen. Eine genauere Bestimmung des Parksuchverkehrs führt zu einer genaueren Prognose von Parkinformationen. Zusätzlich ist es eine wichtige Information für Stadtplaner. Weiterhin weist die vorliegende Erfindung den Vorteil auf, dass das Verfahren ist in einem Serienfahrzeug umsetzbar ist, das heißt die erforderlichen Verarbeitungseinheiten in dem Fahrzeug entweder bereits enthalten sind oder in dieses eingebaut werden können. Dies ist unter anderem aus dem Grund möglich, da das Verfahren der vorliegenden Erfindung und damit der Algorithmus, durch den dieses Verfahren implementiert werden kann, so ausgelegt ist, dass dieses auf einem in dem Fahrzeug vorgesehenen Gerät ausgeführt werden kann. Insbesondere ist die Speicherverwendung gering und der Rechenaufwand klein.

**Patentansprüche**

1. Computerimplementiertes Verfahren zum Verarbeiten von Messdaten eines Fahrzeuges zur Bestimmung des Beginns einer Parkplatzsuche, wobei die Messdaten Positionsdaten des Fahrzeuges sind, eine Endposition (PosEnd)bestimmt wird **dadurch gekennzeichnet, dass** durch Vergleich zumindest eines Teils des Fahrtweges (Dist), der durch eine Reihe aus aufeinanderfolgenden Positionen des Fahrzeuges ermittelt wird mit mindestens einer Luftlinienentfernung (AirDist) zwischen einer Fahrtposition und der Endposition (PosEnd) mindestens ein Ineffizienzwert (ieff) bestimmt wird, durch den eine Ineffizienz des Fahrtwegs identifiziert werden kann, zum Verifizieren einer identifizierten Ineffizienz für mindestens eine Position, für die eine Ineffizienz identifiziert wurde, durch Ermittlung der Abweichung des Fahrtweges von der mittels digitaler Kartenpositionsdaten ermittelten kürzesten Strecke zwischen mindestens einer Fahrtposition und der Endposition mindestens ein Streckenineffizienzwert (Routeieff) bestimmt wird, und

bei Vorliegen einer Streckenineffizienz, die vorliegt, wenn der Streckenineffizienzwert (Routeieff) einen vorgegebenen Schwellwert überschreitet, ein Parkplatzsuchverkehr als erkannt ausgegeben wird.

2. Verfahren nach Anspruch 1, **dadurch gekennzeichnet, dass** die Ineffizienzwerte (ieff) als eine Ineffizienzkurve berechnet werden und bei Überschreiten eines maximalen Wertes der Ineffizienzkurve für eine Fahrtposition über einen Schwellwert eine Ineffizienz für diese Position als identifiziert gilt.

3. Verfahren nach einem der Ansprüche 1 bis 2, **dadurch gekennzeichnet, dass** zum Bestimmen des Ineffizienzwertes der Quotient aus der Differenz aus dem Abstand einer vorherigen Position zu der Endposition (Dist) und der Luftlinienentfernung der vorherigen Position zu der Endposition (AirDist) zu der Differenz aus dem Abstand einer vorherigen Position zu der Endposition (Dist) berechnet wird.

4. Verfahren nach einem der Ansprüche 1 bis 3, **dadurch gekennzeichnet, dass** zur Bestimmung des Streckenineffizienzwertes (Routeieff) der Quotient aus der Differenz aus dem Abstand einer vorherigen Position zu der Endposition (Dist) und der Entfernung der vorherigen Position zu der Endposition auf einer Strecke einer Karte (MapDist) zu der Differenz aus dem Abstand einer vorherigen Position zu der Endposition (Dist) berechnet wird.

5. Verfahren nach einem der Ansprüche 1 bis 4, **dadurch gekennzeichnet, dass** das Verifizieren nur bezüglich der ersten Position auf dem Fahrtweg in Fahrtrichtung, an der eine Ineffizienz identifiziert wurde, ausgeführt wird.

6. Verfahren nach einem der der Ansprüche 1 bis 5, **dadurch gekennzeichnet, dass** die Positionsdaten vor dem Vergleich mit der Luftlinienentfernung durch Überprüfen der Zugehörigkeit zu einer definierten Region (BB) gefiltert werden.

7. Verfahren nach Anspruch 6, **dadurch gekennzeichnet, dass** nur kontinuierliche Positionsdaten in der definierten Region (BB) für den Vergleich herangezogen werden.

8. Verfahren nach Anspruch 6 oder 7, **dadurch gekennzeichnet, dass** die Region (BB) als Rechteck definiert ist und das Rechteck um die aktuelle Position des Fahrzeuges definiert wird.

9. Verfahren nach einem der Ansprüche 1 bis 8, **dadurch gekennzeichnet, dass** das Verfahren während der Fahrt des Fahrzeuges durchgeführt wird und die Endposition dem Fahrtziel entspricht oder das Verfahren nach Beendigung der Fahrt des Fahrzeuges durchgeführt wird und die Endposition der tatsächlichen Parkposition entspricht.

10. Computerprogrammprodukt, das in einem digitalen Rechner oder Rechnersystem geladen werden kann und Softwarecodeabschnitte umfasst, mit denen die Schritte gemäß einem der vorstehenden Ansprüche ausgeführt werden, wenn das Produkt auf dem Rechner oder Rechnersystem läuft.

**Claims**

1. Computer-implemented method for processing measurement data from a vehicle in order to determine the start of a search for a parking space, wherein
the measurement data are position data relating to the vehicle,
an end position (PosEnd) is determined, **characterized in that**
at least one inefficiency value (ieff) is determined by comparing at least part of the drive (Dist), which is determined by means of a series of successive positions of the vehicle, with at least one linear distance (AirDist) between a drive position and the end position (PosEnd) and can be used to identify an inefficiency of the drive,
at least one route inefficiency value (Routeieff) is determined by determining the deviation of the drive from the shortest route between at least one drive position and the end position, as determined by means of digital map position data, in order to verify an identified inefficiency for at least one position for which an inefficiency has been identified, and
parking space search traffic is output as detected if there is a route inefficiency, which is present if the route inefficiency value (Routeieff) exceeds a predefined threshold value.

2. Method according to Claim 1, **characterized in that** the inefficiency values (ieff) are calculated as an inefficiency curve and, if a maximum value of the inefficiency curve is exceeded for a drive position above a threshold value, an inefficiency is considered to have been identified for this position.

3. Method according to one of Claims 1 to 2, **characterized in that**, in order to determine the inefficiency value, the quotient of the difference from the distance of a previous position to the end position (Dist) and the linear distance of the previous position to the end position (AirDist) to the difference from the distance of a previous position to the end position (Dist) is calculated.

4. Method according to one of Claims 1 to 3, **characterized in that**, in order to determine the route inefficiency value (Routeieff), the quotient of the difference from the distance of a previous position to the end position (Dist) and the distance of the previous position to the end position on a route from a map (MapDist) to the difference from the distance of a previous position to the end position (Dist) is calculated.

5. Method according to one of Claims 1 to 4, **characterized in that** only the first position on the drive in the driving direction, at which an inefficiency has been identified, is verified.

6. Method according to one of Claims 1 to 5, **characterized in that**, before the comparison with the linear distance, the position data are filtered by checking the affiliation with a defined region (BB) .

7. Method according to Claim 6, **characterized in that** only continuous position data in the defined region (BB) are used for the comparison.

8. Method according to Claim 6 or 7, **characterized in that** the region (BB) is defined as a rectangle and the rectangle is defined around the current position of the vehicle.

9. Method according to one of Claims 1 to 8, **characterized in that** the method is carried out during the drive of the vehicle and the end position corresponds to the destination, or the method is carried out after the conclusion of the drive of the vehicle and the end position corresponds to the actual parking position.

10. Computer program product which can be loaded into a digital computer or computer system and comprises software code sections which are used to carry out the steps according to one of the preceding claims if the product runs on the computer or computer system.

**Revendications**

1. Procédé mis en œuvre par ordinateur pour traiter des données de mesure d'un véhicule afin de déterminer le début d'une recherche de place de stationnement, les données de mesure étant des données de position du véhicule et une position finale (PosEnd) étant déterminée, **caractérisé en ce qu'**en comparant au moins d'une partie du trajet (Dist), qui est déterminé par une série de positions successives du véhicule, avec au moins une distance en ligne droite (AirDist) entre une position de conduite et la position finale (PosEnd), au moins une valeur d'inefficacité (ieff) est déterminée qui permet d'identifier une inefficacité du trajet,
afin de vérifier une inefficacité identifiée pour au moins une position pour laquelle une inefficacité a été identifiée, en déterminant l'écart du trajet du chemin le plus court déterminé au moyen de données de position cartographiques numériques entre au moins une position de conduite et la position finale, au moins une valeur d'inefficacité de chemin (Routeieff) est déterminée, et si une inefficacité de chemin est donnée, qui existe si la valeur d'inefficacité de chemin (Routeieff) dépasse une valeur seuil prédéfinie, un trafic de recherche de place de stationnement est sorti comme ayant été reconnu.

2. Procédé selon la revendication 1, **caractérisé en ce que** les valeurs d'inefficacité (ieff) sont calculées sous la forme d'une courbe d'inefficacité, et si une valeur maximale de la courbe d'inefficacité est dépassée pour une position de conduite au-delà d'une valeur seuil, une inefficacité pour cette position est considérée comme étant identifiée.

3. Procédé selon l'une quelconque des revendications 1 à 2, **caractérisé en ce que** pour la détermination de la valeur inefficacité, le quotient de la différence de la distance d'une position précédente à la position finale (Dist) et de la distance en ligne droite de la position précédente à la position finale (AirDist) par rapport à la différence de la distance d'une position précédente à la position finale (Dist) est calculé.

4. Procédé selon l'une quelconque des revendications 1 à 3, **caractérisé en ce que** pour la détermination de la valeur d'inefficacité de chemin (Routeieff), le quotient de la différence de la distance d'une position précédente à la position finale (Dist) et de la distance de la position précédente à la position finale sur un chemin d'une carte (MapDist) par rapport à la différence de la distance d'une position précédente à la position finale (Dist) est calculé.

5. Procédé selon l'une quelconque des revendications 1 à 4, **caractérisé en ce que** la vérification n'est effectuée que concernant la première position sur le trajet dans le sens de la marche où une inefficacité a été identifiée.

6. Procédé selon l'une quelconque des revendications 1 à 5, **caractérisé en ce que** les données de position sont filtrées par une vérification de l'appartenance à une région définie (BB) avant d'être comparées avec la distance en ligne droite.

7. Procédé selon la revendication 6, **caractérisé en ce que** seules des données de position continues dans la région définie (BB) sont utilisées pour la comparaison.

8. Procédé selon la revendication 6 ou 7, **caractérisé en ce que** la région (BB) est définie comme un rectangle, et le rectangle est définie autour de la position actuelle du véhicule.

9. Procédé selon l'une quelconque des revendications 1 à 8, **caractérisé en ce que** le procédé est effectué pendant le déplacement du véhicule et la position finale correspond à la destination, ou **en ce que** le procédé est effectué à la fin du déplacement du véhicule et la position finale correspond à la position de stationnement réelle.

10. Produit de programme informatique qui peut être chargé sur un ordinateur numérique ou un système informatique et comprend des parties de code logiciel permettant d'exécuter les étapes selon l'une quelconque des revendications précédentes si le produit est exécuté sur l'ordinateur ou le système informatique.

Fig. 2

Fig. 1

ID=PSVAlgNoMap(Pos,thresh)

Fig. 3

ieff=CalculateInEfficiency(Pos)

Fig. 4

EP 3 161 808 B1

v=VerifyWithMap(Pos1,thresh)

```
              ●
              │
              ▼
   ┌──────────────────────┐
   │  Dist=CalcDrivingDist(Pos1)  │
   └──────────────────────┘
              │
              ▼
   ┌──────────────────────┐
   │  MapDist=CalcMapDist(Pos1)   │
   └──────────────────────┘
              │
              ▼
   ┌──────────────────────┐
   │  Routeleff=(Dist-MapDist)/Dist │
   └──────────────────────┘
              │
              ▼
           ◇ Routeieff>thresh ◇
   yes ◄────                    ────► no
       │                             │
       ▼                             ▼
   ┌─────────┐                ┌─────────┐
   │ v=true  │                │ v=false │
   └─────────┘                └─────────┘
       │                             │
       └──────────────┬──────────────┘
                      ▼
                      ◉
```

Fig. 5

EP 3 161 808 B1

Fig. 6

NewPos (lat,lon)

●

AddCoordToMem(lat,lon)

RegionFilter

UpdateMEM

◉

Fig. 7

●

BB=GetBoundingBox(ActualPos)

Pos=GetAllPosFromFIFO

marked=MarkAllPointsOutsideBB(Pos)

marked=MarkAllPosOlderThanAlreadyMarked(marked,Pos)

deletePos(marked)

◉

Fig. 8

Fig. 9

EP 3 161 808 B1

**IN DER BESCHREIBUNG AUFGEFÜHRTE DOKUMENTE**

**In der Beschreibung aufgeführte Patentdokumente**

- DE 102012212347 A1
- DE 102012201472 A1
- WO 2010023571 A1